# EUROPEAN PATENT APPLICATION

(11) **EP 3 441 927 A1**
(43) Date of publication of application: **13.02.2019**
(21) Application number: 17896500.0
(22) Date of filing: 26.05.2017
(51) Int. Cl.: G06Q 20/40

(54) **PAYMENT METHOD AND TERMINAL**

(30) Priority: 20.02.2017 CN 201710091215
(71) Applicant: Huawei Technologies Co., Ltd., Longgang District Shenzhen, Guangdong 518129 (CN)
(72) Inventor: LI, Ru, Shenzhen Guangdong 518129 (CN); HUANG, Xi, Shenzhen Guangdong 518129 (CN)
(74) Representative: Epping - Hermann - Fischer
(86) International application number: PCT/CN2017/086217
(87) International publication number: WO 2018/149049

(57) **Abstract**

This application provides a payment method and a terminal. The method includes: receiving a first fingerprint entered by a user; determining whether the first fingerprint is a payment fingerprint in a plurality of stored fingerprints of the user; and if the first fingerprint is the payment fingerprint, determining that payment succeeds; or if the first fingerprint is not the payment fingerprint, determining whether the first fingerprint is associated with the payment fingerprint in the plurality of stored fingerprints of the user, and if the first fingerprint is associated with the payment fingerprint, determining that payment succeeds; or if the first fingerprint matches is not associated with the payment fingerprint, determining that payment fails, where the first fingerprint and a fingerprint associated with the first fingerprint belong to the same user. In this application, the user needs to perform a payment fingerprint registration operation only once to enable a plurality of fingerprints of the same user to be used for payment, thereby improving convenience of performing a payment operation.

## Description

### TECHNICAL FIELD

This application relates to the field of terminal technologies, and in particular, to a payment method and a terminal.

### BACKGROUND

In recent years, fingerprints are gradually applied to intelligent terminals for payment due to their lifelong invariance and uniqueness, bringing convenient operation experience to users.

In the prior art, to improve payment security, a user may separately set a fingerprint for payment. For example, the user enters a fingerprint to perform payment fingerprint registration, and the user may use the fingerprint to perform payment if the registration succeeds.

However, in this manner provided in the prior art, when the user needs to use a plurality of fingerprints for payment, the user needs to perform a payment fingerprint registration operation a plurality of times. Consequently, it is inconvenient to perform a payment operation.

### SUMMARY

This application provides a payment method and a terminal, so that a user needs to perform a payment fingerprint registration operation only once to enable a plurality of fingerprints of the same user to be used for payment, thereby improving convenience of performing a payment operation.

According to a first aspect, a payment method is provided, including: receiving a first fingerprint entered by a user; and if it is determined that the first fingerprint is a payment fingerprint in a plurality of stored fingerprints of the user, determining that payment succeeds; or if it is determined that the first fingerprint is not a payment fingerprint, determining determining whether the first fingerprint is associated with the payment fingerprint in a plurality of stored fingerprints of the user, and if the first fingerprint is associated with the payment fingerprint, determining that payment succeeds; or if the first fingerprint is not associated with the payment fingerprint, determining that payment fails, where the first fingerprint and a fingerprint associated with the first fingerprint belong to the same user.

In a specific implementation, in a manner 1, the terminal may determine whether the first fingerprint is a fingerprint that is in the plurality of stored fingerprints of the user and that belongs to a same user as the payment fingerprint; and if yes, determine that the first fingerprint is associated with the payment fingerprint; otherwise, determine that the first fingerprint is not associated with the payment fingerprint.

In a manner 2, payment permission is configured for a user that is associated with the payment fingerprint in the plurality of stored fingerprints of the user; and the terminal may alternatively determine whether the payment permission is configured for a user that is associated with the first fingerprint in the plurality of stored fingerprints of the user, and if yes, determine that the first fingerprint is associated with the payment fingerprint; or if not, determine that the first fingerprint is not associated with the payment fingerprint.

In this application, the payment fingerprint may be a fingerprint that is entered by the user during payment fingerprint registration. It may be learned that in this application, the user needs to perform a payment fingerprint registration operation only once to enable a plurality of fingerprints of the same user to be used for payment, thereby improving convenience of performing a payment operation. In addition, in this application, if the terminal stores fingerprints of a plurality of users, a fingerprint of a user who successfully registers a payment fingerprint can be used for payment, while a fingerprint of another user cannot be used for payment. Therefore, security of fingerprint payment is ensured.

In an optional design, when determining that the first fingerprint is not associated with the payment fingerprint, the terminal may further output first prompt information, to prompt the user to reenter a fingerprint; receive a second fingerprint entered by the user, and collect physiological feature information of the user when the second fingerprint is received; determine whether a payment fingerprint corresponding to the same physiological feature information as the second fingerprint exists in a stored correspondence between the physiological feature information of the user and the plurality of fingerprints; and add the second fingerprint to the plurality of fingerprints if the payment fingerprint exists.

In this application, the terminal may add another fingerprint of the user corresponding to the payment fingerprint to the plurality of stored fingerprints. It may be found with reference to the foregoing embodiment that all fingerprints of the user corresponding to the payment fingerprint can be used for payment. In addition, it may be found that the user needs to register a payment fingerprint only once to enable all the fingerprints of the user to be used for payment, thereby improving convenience of performing a payment operation.

In another optional design, when a fingerprint sensor collects the first fingerprint entered by the user, physiological feature information of the user is further collected, and it is determined whether a payment fingerprint corresponding to the same physiological feature information as the first fingerprint exists in a stored correspondence between the physiological feature information of the user and the plurality of fingerprints. If the payment fingerprint exists, it is determined that payment succeeds; or if the payment fingerprint does not exist, it is determined that payment fails.

In this application, all the fingerprints of the user corresponding to the payment fingerprint can be used for payment. In addition, it may be found that the user needs to register a payment fingerprint only once to enable all the fingerprints of the user to be used for payment, thereby improving convenience of performing a payment operation.

In another optional design, the payment fingerprint may further be fingerprints of some or all fingers that are in enrolled fingerprints and that belong to the same user as the fingerprint that is entered by the user during payment fingerprint registration. The physiological feature information may include at least one of the following: pulse information and finger vein information.

According to a second aspect, a terminal is provided, including a first sensor, a display, a touch-sensitive surface, one or more processors, and a memory. The memory is configured to store one or more programs, and the one or more programs are configured to be executed by the processor to instruct the terminal to perform the following operations:
collecting, by using the first sensor, a first fingerprint entered by a user;
determining whether the first fingerprint is a payment fingerprint in a plurality of stored fingerprints of the user; and
if the first fingerprint is the payment fingerprint, determining that payment succeeds; or if the first fingerprint is not the payment fingerprint, determining whether the first fingerprint is associated with the payment fingerprint in the plurality of stored fingerprints of the user, and if the first fingerprint is associated with the payment fingerprint, determining that payment succeeds; or if the first fingerprint is not associated with the payment fingerprint, determining that payment fails, where the first fingerprint and a fingerprint associated with the first fingerprint belong to the same user.

In another optional design, in a manner 1, the processor may determine whether the first fingerprint is a fingerprint that is in the plurality of stored fingerprints of the user and that belongs to a same user as the payment fingerprint; and if yes, determine that the first fingerprint is associated with the payment fingerprint; otherwise, determine that the first fingerprint is not associated with the payment fingerprint.

In a manner 2, payment permission is configured for a user that is associated with the payment fingerprint in the plurality of stored fingerprints of the user; and the processor may alternatively determine whether payment permission is configured for a user that is associated with the first fingerprint in the plurality of stored fingerprints of the user, and if yes, determine that the first fingerprint is associated with the payment fingerprint; or if not, determine that the first fingerprint is not associated with the payment fingerprint.

In this application, the payment fingerprint may be a fingerprint that is entered by the user during payment fingerprint registration. It may be learned that in this application, the user needs to perform a payment fingerprint registration operation only once to enable a plurality of fingerprints of the same user to be used for payment, thereby improving convenience of performing a payment operation. In addition, in this application, if the terminal stores fingerprints of a plurality of users, a fingerprint of a user who successfully registers a payment fingerprint can be used for payment, while a fingerprint of another user cannot be used for payment. Therefore, security of fingerprint payment is ensured.

In another optional design, the terminal may further include a second sensor. When collecting, by using the first sensor, the first fingerprint entered by the user, the terminal may further collect physiological feature information of the user by using the second sensor; if the first fingerprint is not associated with the payment fingerprint, output first prompt information, to prompt the user to reenter a fingerprint; receive a second fingerprint entered by the user, and collect physiological feature information of the user when the second fingerprint is received; determine whether a payment fingerprint corresponding to the same physiological feature information as the second fingerprint exists in a stored correspondence between the physiological feature information of the user and the plurality of fingerprints; and add the second fingerprint to the plurality of fingerprints if the payment fingerprint exists.

In this application, the terminal may add another fingerprint of the user corresponding to the payment fingerprint to the plurality of stored fingerprints. It may be found with reference to the foregoing embodiment that all fingerprints of the user corresponding to the payment fingerprint can be used for payment. In addition, it may be found that a user needs to register a payment fingerprint only once to enable all fingerprints of the user to be used for payment, thereby improving convenience of performing a payment operation.

In another optional design, the payment fingerprint may further be fingerprints of some or all fingers that are in enrolled fingerprints and that belong to the same user as the fingerprint that is entered by the user during payment fingerprint registration. The physiological feature information may include at least one of the following: pulse information and finger vein information.

According to a third aspect, another terminal is provided, including a functional unit configured to perform the method according to the first aspect.

According to a fourth aspect, a readable non-volatile storage medium that stores a computer instruction is provided. The computer instruction is executed by a terminal that has a first sensor, a display, a touch-sensitive surface, and one or more processors, to implement the method according to the first aspect.

According to a fifth aspect, a graphical user interface of a terminal is provided. The terminal includes a first sensor, a display, a touch-sensitive surface, one or more processors, and a memory; and
when the first sensor detects a first fingerprint entered by a user, a payment success prompt is displayed if it is determined that the first fingerprint is a payment fingerprint in a plurality of stored fingerprints of the user; or a payment success prompt is displayed if it is determined that the first fingerprint is associated with a payment fingerprint in a plurality of stored fingerprints of the user; or
a payment failure prompt is displayed if it is determined that the first fingerprint is not associated with a payment fingerprint in a plurality of stored fingerprints of the user, where
the first fingerprint and a fingerprint associated with the first fingerprint belong to the same user.

In another optional design, the terminal further includes a second sensor, and first prompt information is displayed if it is determined that the first fingerprint is not associated with the payment fingerprint, where the first prompt information is used to prompt the user to reenter a fingerprint; a second fingerprint entered by the user is collected by using the first sensor, and physiological feature information of the user is collected by using the second sensor when the second fingerprint is collected; and the second fingerprint is added to the plurality of fingerprints if it is determined that a payment fingerprint corresponding to the same physiological feature information as the second fingerprint exists in a stored correspondence between the physiological feature information of the user and the plurality of fingerprints.

It may be learned that the embodiments of this application have the following beneficial effects:

In the embodiments of this application, even if the user performs payment fingerprint registration only once, in other words, even if the terminal stores only one payment fingerprint, all fingerprints that are in the plurality of fingerprints stored in the terminal and that belong to the same user as the payment fingerprint can be used for payment. Therefore, the user needs to perform a payment fingerprint registration operation only once to enable a plurality of fingerprints of the same user to be used for payment, thereby improving convenience of performing a payment operation.

### BRIEF DESCRIPTION OF DRAWINGS

The following clearly and completely describes the technical solutions in the embodiments of this application with reference to the accompanying drawings in the embodiments of this application.
FIG. 1A to FIG. 1E are a schematic diagram of enrolling a fingerprint during a fingerprint unlocking setting according to an embodiment of this application;
FIG. 2A to FIG. 2C are a schematic diagram of payment fingerprint registration according to an embodiment of this application;
FIG. 3A to FIG. 3D are a schematic diagram of fingerprint payment according to an embodiment of this application;
FIG. 4 is a block diagram of a partial structure of a terminal according to an embodiment of this application;
FIG. 5A and FIG. 5B are a schematic flowchart of a fingerprint payment method according to an embodiment of this application;
FIG. 6 is a schematic diagram of a first pulse signal according to an embodiment of this application; and
FIG. 7 is a functional block diagram of a terminal according to an embodiment of this application.

### DESCRIPTION OF EMBODIMENTS

The following clearly and completely describes the technical solutions in the embodiments of this application with reference to the accompanying drawings in the embodiments of this application.

Some human-machine interaction embodiments provided in the embodiments of this application are first described.

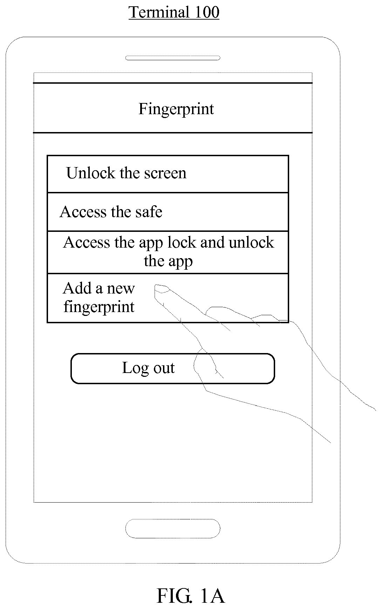

FIG. 1A to FIG. 1E are a schematic diagram of enrolling a fingerprint by a user during a fingerprint unlocking setting.

As shown in FIG. 1A, a terminal 100 displays a "fingerprint" setting interface of a terminal system, and the "fingerprint" setting interface includes options of "unlock the screen", "access the safe", "access the app lock and unlock the app", and "add a new fingerprint". A user A taps the "add a new fingerprint" option to enter an "add a new fingerprint" interface.

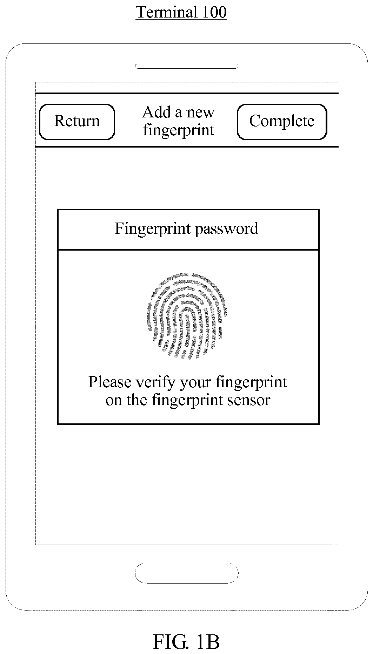

As shown in FIG. 1B, the "add a new fingerprint" interface displays a prompt "please place your finger on the fingerprint sensor on the back of the mobile phone to enroll a fingerprint".

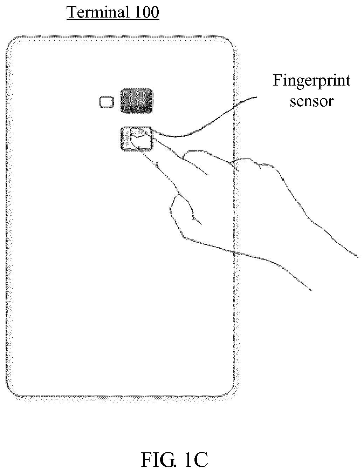

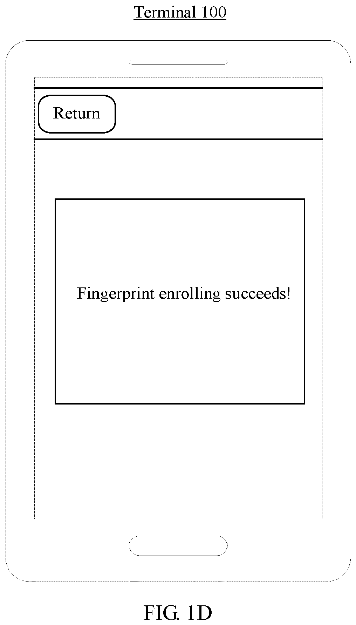

As shown in FIG. 1C, after the terminal 100 displays a fingerprint enrolling interface shown in FIG. 1B, the user A may place a forefinger on the fingerprint sensor on the back of the terminal 100 to perform a fingerprint enrolling operation until a prompt "enrolling succeeds" shown in FIG. 1D is displayed.

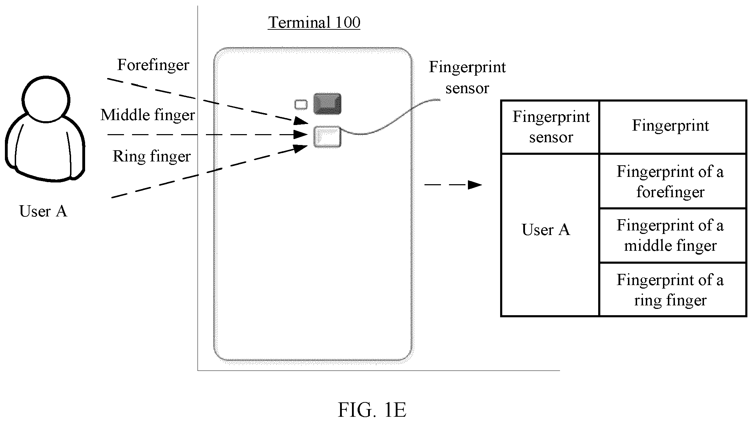

FIG. 1E is a schematic diagram of enrolling a fingerprint of another finger by the user during the fingerprint unlocking setting.

As shown in FIG. 1E, with reference to the embodiments shown in FIG. 1A to FIG. 1C, after the terminal 100 displays the fingerprint enrolling interface shown in FIG. 1B, the user A may further place a middle finger on the fingerprint sensor on the back of the terminal 100 to perform a fingerprint enrolling operation, completing an operation of enrolling a fingerprint of the middle finger. Alternatively, in FIG. 1C, the user A may place a ring finger on the fingerprint sensor on the back of the fingerprint sensor of the terminal 100 to perform a fingerprint enrolling operation, completing an operation of enrolling a fingerprint of the ring finger.

An optical detection sensor may be further integrated in the fingerprint sensor on the back of the terminal 100. The optical detection sensor may be configured to collect physiological feature information of the user, for example, pulse information of the user. When collecting a fingerprint of the user by using the fingerprint sensor, the terminal 100 may further collect pulse information of the user by using the optical detection sensor. The terminal 100 may determine, based on the collected pulse information of the user, whether corresponding fingerprints belong to a same user. For example, when determining that two fingerprints correspond to same pulse information, the terminal 100 determines that the two fingerprints belong to a same user. In another implementation, when determining that two fingerprints correspond to same finger vein information, the terminal 100 determines that the two fingerprints belong to a same user. The terminal 100 may establish a database based on a correspondence between an enrolled fingerprint and a user. The database includes an enrolled fingerprint of a user. There is a correspondence between a user and a fingerprint. As shown in FIG. IE, the terminal 100 may establish, based on the foregoing description, a database that includes a fingerprint of the forefinger, the fingerprint of the middle finger, and the fingerprint of the ring finger of the user A. There is a correspondence between the user A and each of the fingerprint of the forefinger, the fingerprint of the middle finger, and the fingerprint of the ring finger of the user A.

It should be noted that FIG. 1A to FIG. 1E show merely an embodiment of enrolling a fingerprint during the fingerprint unlocking setting. Actually, the user may further enroll a fingerprint in another manner during the fingerprint unlocking setting. Details are not described herein. In addition, in this application, the fingerprint enrolled by the user may include not only a fingerprint enrolled by the user during the fingerprint unlocking setting, but also a fingerprint that is enrolled by the user when the user uses a payment application program, a fingerprint that is enrolled by the user when the user uses an e-commerce application program, or a fingerprint that is enrolled by the user when the user uses a social application program. This is not limited herein.

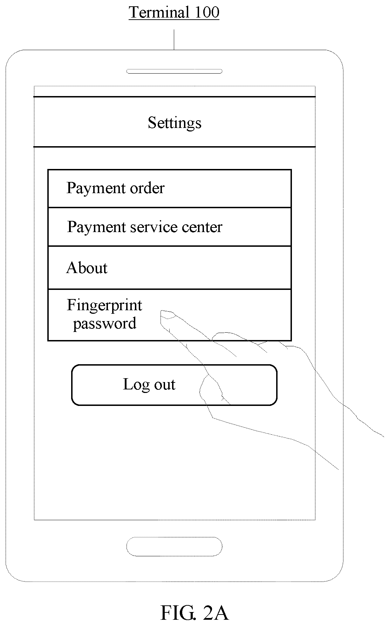

FIG. 2A to FIG. 2C are a schematic diagram of payment fingerprint registration.

In this application, a payment fingerprint may be independently set. To be specific, a user may independently enter a fingerprint for payment fingerprint registration. If the fingerprint is successfully registered, the user may use the fingerprint for payment.

As shown in FIG. 2A, a terminal 100 displays a "settings" interface of a payment application program, and the "settings" interface includes options of "payment order", "payment service center", "about", "fingerprint password", and "log out". As shown in FIG. 2A, the user selects the "fingerprint password" option to enter a fingerprint password interface.

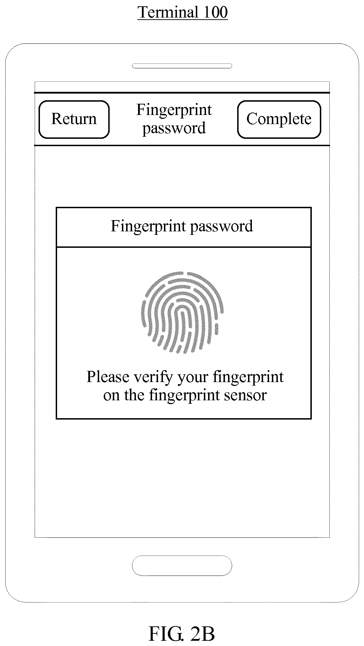

As shown in FIG. 2B, the fingerprint password interface displays a fingerprint identifier and a prompt "please verify your fingerprint on the fingerprint sensor".

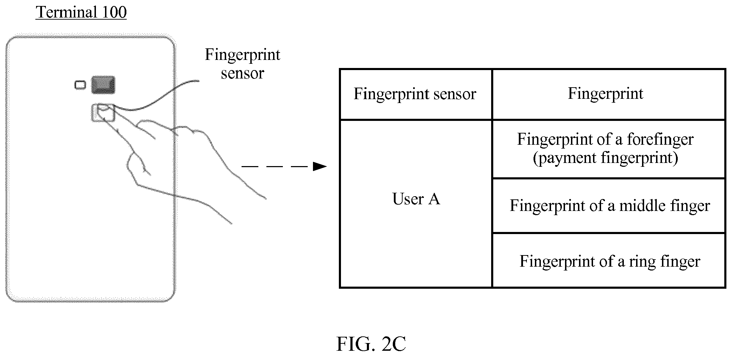

After the terminal 100 displays the fingerprint password interface, the user may place a finger on the fingerprint sensor on the back of the terminal 100 for fingerprint registration. If the registration succeeds, the terminal 100 may determine the fingerprint as a payment fingerprint. As shown in FIG. 2C, a user A places a forefinger on the fingerprint sensor on the back of the terminal 100, a fingerprint of the forefinger of the user A is successfully registered, and the terminal 100 determines the fingerprint of the forefinger of the user A as a payment fingerprint.

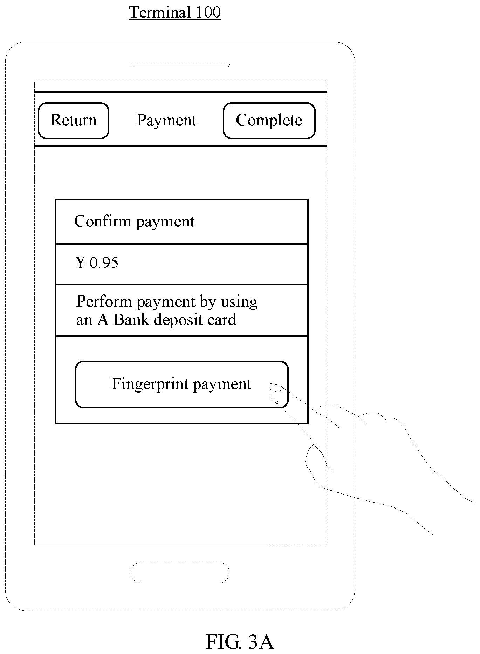

FIG. 3A to FIG. 3D are a schematic diagram of fingerprint payment.

This embodiment of this application is applicable to a scenario in which a user performs online payment for online shopping, or a user uses a payment application program to perform online account transfer. Details are as follows:
As shown in FIG. 3A, a terminal displays a "confirm payment" interface, and the "confirm payment" interface shows that a payment amount is ¥ 0.95, and the payment is performed by using an A Bank deposit card. In addition, the "confirm payment" interface may further include a control that is used to receive an input operation of the user and respond to the user operation to enter a fingerprint payment interface. As shown in FIG. 3A, the user taps the control with a finger, and the terminal 100 switches the interface to the fingerprint payment interface in response to the tapping operation of the user.

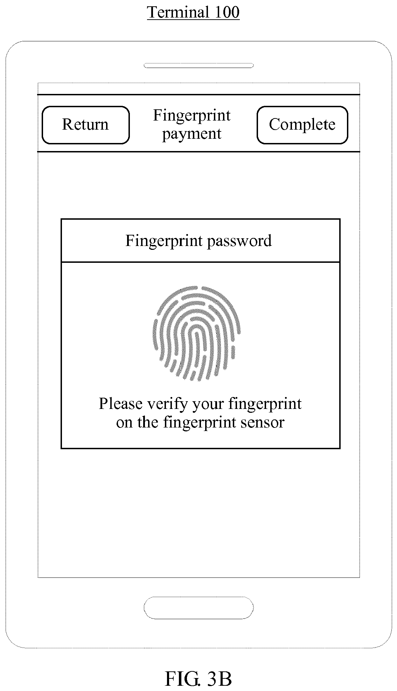

As shown in FIG. 3B, the fingerprint payment interface displays a prompt "please verify your fingerprint on the fingerprint sensor".

After the terminal 100 displays the fingerprint payment interface, the user may place a finger on the fingerprint sensor on the back of the terminal 100 to perform fingerprint payment.

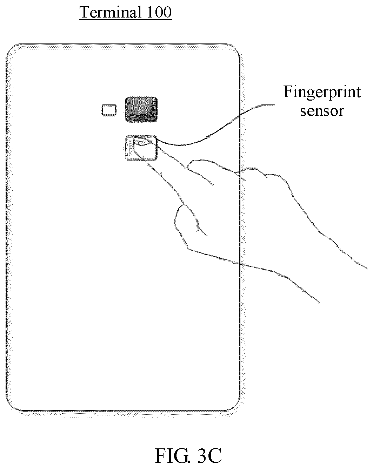

In this application, if one fingerprint of a user is determined as a payment fingerprint by the terminal, all fingerprints of the user may be used to complete fingerprint payment (or successfully perform payment). For description, with reference to the database stored in the foregoing terminal 100, the database includes the fingerprint of the forefinger, the fingerprint of the middle finger, and the fingerprint of the ring finger of the user A, and the fingerprint of the forefinger of the user A is further determined as a payment fingerprint by the terminal 100. After the user A displays the fingerprint payment interface on the terminal 100, as shown in FIG. 3C, the user A may place the forefinger on the fingerprint sensor on the back of the terminal 100 to complete fingerprint payment. Alternatively, the user A may place the middle finger on the fingerprint sensor on the back of the terminal 100 to complete fingerprint payment. Alternatively, the user A may place the ring finger on the fingerprint sensor on the back of the terminal 100 to complete fingerprint payment. Alternatively, the user A may place another finger such as a thumb or a little finger of the user A on the fingerprint sensor on the back of the terminal 100 to complete fingerprint payment.

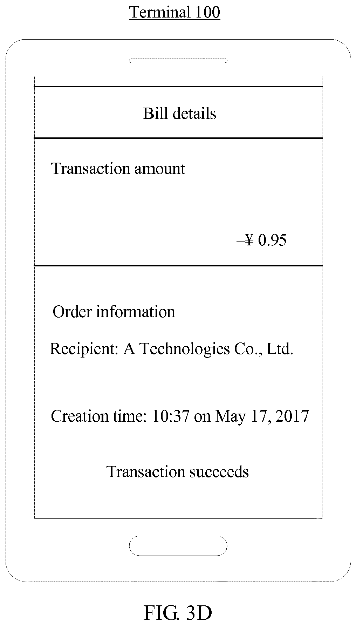

As shown in FIG. 3D, after the payment succeeds, the terminal 100 displays a transaction success interface, and the transaction success interface may display bill details. For example, a recipient is an A Technologies Co., Ltd, a transaction amount is ¥ 0.95, the payment is performed through a bank A, a creation time is 10:37 on May 17, 2017, and prompt information is that the transaction succeeds.

It may be learned that in this embodiment of this application, the user may register a payment fingerprint only once to enable all fingerprints of the user to be used for payment, thereby improving convenience of performing a payment operation.

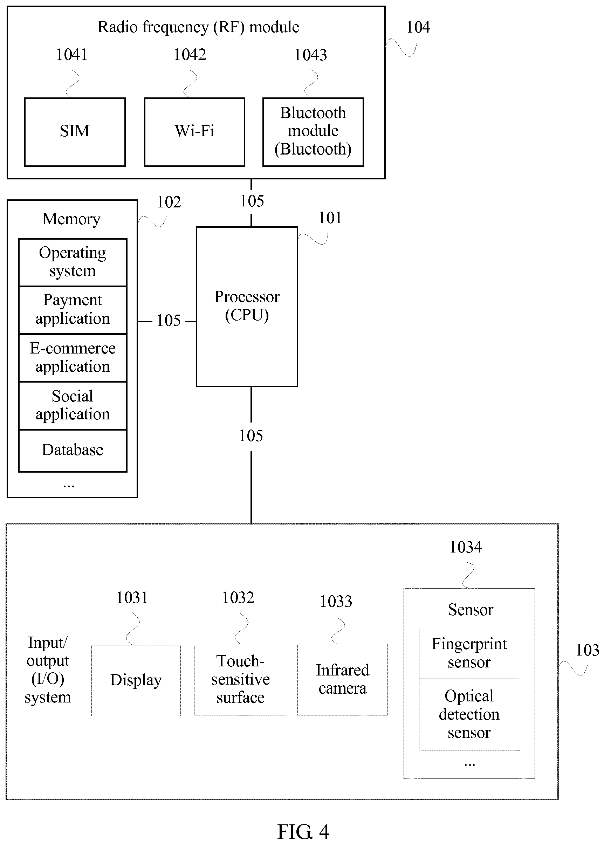

The following describes in detail a specific fingerprint payment procedure with reference to a collaborative relationship between components of the terminal 100. First, it should be noted that the terminal 100 in the embodiments of this application may include a mobile phone, a tablet computer, a PDA (Personal Digital Assistant, personal digital assistant), a POS (Point of Sales, point of sale), an in-vehicle computer, and the like. Referring to FIG. 4, FIG. 4 is a block diagram of a partial structure of a terminal according to an embodiment of this application. As shown in FIG. 4, the terminal 100 may include a processor 101, a memory 102 (one or more computer readable storage media), an input/output (Input output, I/O) system 103, and a radio frequency (Radio Frequency, RF) module 104. A person skilled in the art may understand that a structure of the terminal shown in FIG. 4 does not constitute a limitation on the terminal, may include more or fewer components than those shown in FIG. 4, combine some components, or have different component deployments. These components may communicate with each other by using one or more communications buses 105.

The processor 101 may include one or more CPUs, a clock module, and a power management module through integration. The clock module is mainly configured to generate a clock required for data transmission and time sequence control for the processor 101. The power management module is mainly configured to provide a stable high-precision voltage for the processor 101, the input/output system 103, the radio frequency module 104, and the like.

The memory 102 is coupled to the processor 101 and is configured to store various software programs and/or a plurality of groups of instructions. In a specific implementation, the memory 102 may include a high-speed random access memory, and may also include a non-volatile memory, such as one or more disk storage devices, a flash memory device, or another non-volatile solid-state storage device. The memory 102 may store an operating system, for example, an embedded operating system such as Android, iOS, Windows, or Linux. The memory 102 may further store one or more application programs, for example, a payment application program, an e-commerce application program, and a social application program. The memory 102 may further store a database that includes a correspondence between a user and a fingerprint.

The input/output system 103 is mainly configured to implement a function of interaction between the terminal 100 and a user/an external environment, and mainly includes an input/output apparatus of the terminal 100. In a specific implementation, the input/output system 103 may include a display 1031, a touch-sensitive surface 1032, an audio circuit 1033, an infrared camera 1033, and a sensor 1034. The touch-sensitive surface 1032 may be configured to collect a touch operation of the user on or near the touch-sensitive surface 1032, for example, an operation performed by the user on the touch-sensitive surface 1032 by using any proper object or accessory such as a finger or a stylus. The infrared camera 1033 may be configured to collect vein information of a fingerprint of the user. The sensor 1034 may include a fingerprint sensor, an optical detection sensor, and the like. The optical detection sensor may be configured to collect pulse information of the user and the like. It should be noted that the input/output system 103 may further include another I/O peripheral.

The radio frequency module 104 is configured to receive and send a wireless signal, and mainly integrates a receiver and a transmitter of the terminal 100. In a specific implementation, the radio frequency module 104 may include but is not limited to: a subscriber identification module (Subscriber Identification Module, SIM), a Wireless Fidelity (Wireless Fidelity, Wi-Fi) module, and a Bluetooth module. The radio frequency module 104 may communicate with a network and another device through wireless communication. The wireless communication may use any communications standard or protocol, including but not limited to a Global System for Mobile Communications (Global System for Mobile communications, GSM), a general packet radio service (General Packet Radio Service, GPRS), Code Division Multiple Access (Code Division Multiple Access, CDMA), Wideband Code Division Multiple Access (Wideband Code Division Multiple Access, WCDMA), Long Term Evolution (Long Term Evolution, LTE), an e-mail, a short message service (Short Message Service, SMS), and the like.

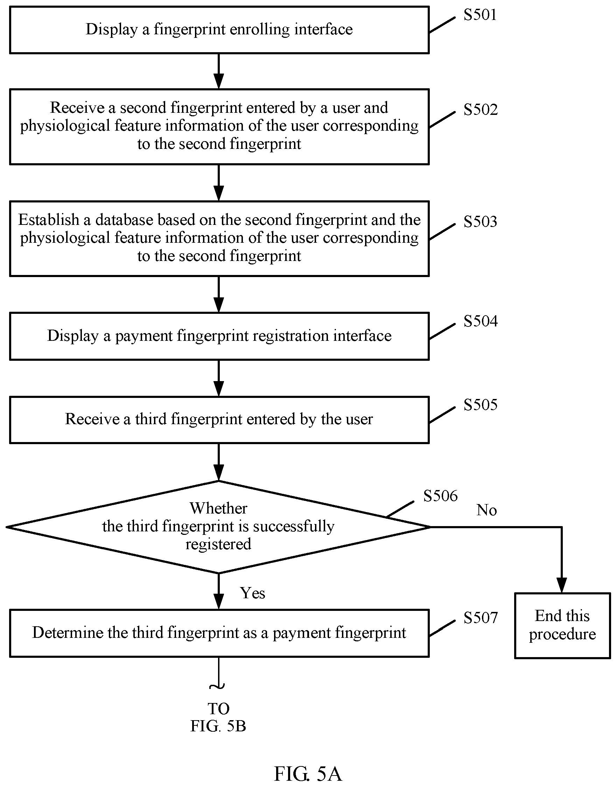

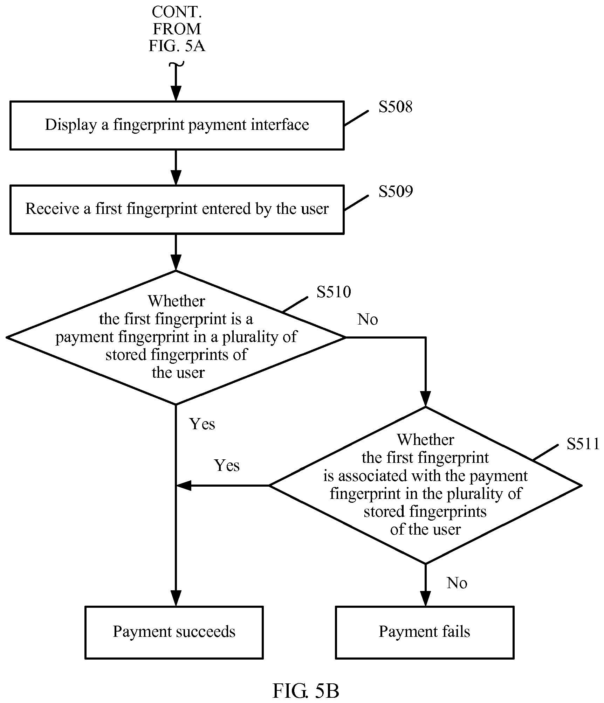

Referring to FIG. 5A and FIG. 5B, FIG. 5A and FIG. 5B are a schematic flowchart of a fingerprint payment method. As shown in FIG. 5A and FIG. 5B, the method includes but is not limited to the following steps:
S501. Display a fingerprint enrolling interface. A display 1031 displays the fingerprint enrolling interface. The fingerprint enrolling interface may be shown in FIG. 1B, and details are not described herein again.
S502. Receive a third fingerprint entered by a user and physiological feature information of the user corresponding to the third fingerprint. The third fingerprint may be a fingerprint that is entered by the user and collected by using a first sensor such as a fingerprint sensor after the display 1031 displays the fingerprint enrolling interface shown in FIG. 1B. The physiological feature information of the user may include pulse information of the user. When the fingerprint sensor collects the third fingerprint of the user, a second sensor such as an optical detection sensor integrated in the fingerprint sensor collects the pulse information of the user. The fingerprint sensor and the optical detection sensor respectively send the collected third fingerprint and the collected pulse information of the user corresponding to the third fingerprint to a processor 101.
S503. Establish a database based on the third fingerprint and the physiological feature information of the user corresponding to the third fingerprint, where the database includes a correspondence between a user and a fingerprint.

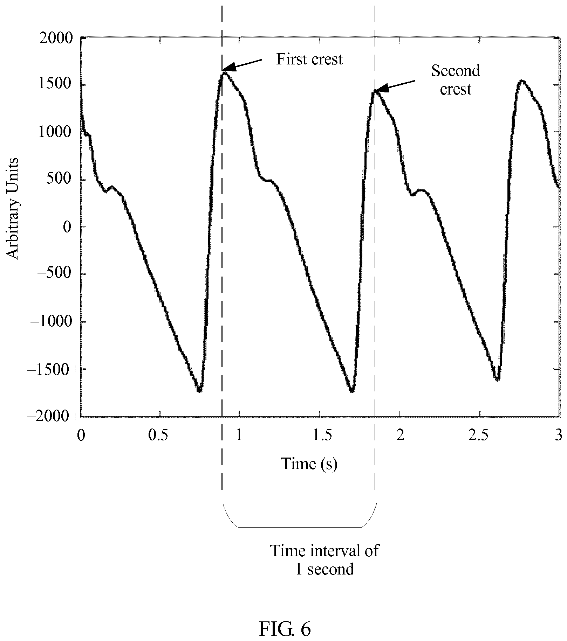

The processor 101 may determine, based on the collected pulse information of the user, whether corresponding fingerprints belong to a same user. Specifically, the processor 101 may calculate a heart rate based on a time interval between adjacent crests or adjacent troughs of a pulse signal. If calculated heart rates are the same or fall within a preset threshold range, it is determined that fingerprints corresponding to pulse signals that are used to calculate the heart rates belong to a same user. For example, in step S502, when a fingerprint of a forefinger of a user A is collected, a first pulse signal of the user A is further collected. The first pulse signal is shown in FIG. 6. The processor 101 calculates, based on a time interval of 1 second between a first crest and an adjacent second crest of the first pulse signal, a heartbeat rate of the user corresponding to the first pulse signal to obtain 60 seconds÷1 times/second=60 times/minute. It is assumed that the preset threshold range is 55 times/minute to 65 times/minute. If a second pulse signal of the user A is further collected when a fingerprint of a middle finger of the user A is collected in step S502, the processor 101 calculates, based on the second pulse signal, a heart rate of the user to obtain 58 times/minute. The heart rate of the user: 58 times/minute that is calculated based on the second pulse signal and the heart rate of the user: 60 times/minute that is calculated based on the first pulse signal both fall within the preset threshold range of 55 times/minute to 65 times/minute. Therefore, the processor 101 determines that the fingerprint of the middle finger of the user that is collected in step S502 belongs to the same user as the fingerprint of the forefinger of the user that is collected in step S502. Likewise, if a third pulse signal of the user A is collected when a fingerprint of a ring finger of the user A is collected in step S502, the processor 101 calculates, based on the third pulse signal, a heart rate of the user to obtain 62 times/minute. The heart rate of the user: 62 times/minute that is calculated based on the third pulse signal and the heart rate of the user: 60 times/minute that is calculated based on the first pulse signal both fall within the preset threshold range of 55 times/minute to 65 times/minute. Therefore, the processor 101 determines that the fingerprint of the ring finger of the user that is collected in step S502 belongs to the same user as the fingerprint of the forefinger of the user that is collected in step S502. Then the processor 101 may establish a database based on a correspondence between an enrolled fingerprint and a user, for example, a database shown in FIG. IE. Finally, the processor 101 sends the database to a memory 102 for storage.

Optionally, the processor 101 may further determine whether heights of crests or troughs, times when crests or troughs occur, or time intervals between adjacent crests or troughs of different pulse signals are the same, to determine whether fingerprints corresponding to the pulse signals belong to a same user. If the heights of the crests or troughs, the times when the crests or troughs occur, or the time intervals between adjacent crests or troughs of the different pulse signals are the same, it is determined that the fingerprints corresponding to the different pulse signals belong to the same user. It may be understood by a person skilled in the art that "same" in same physiological feature information in this application may mean that values of the physiological feature information are equal or fall within a preset threshold range. Details are not described herein.

In addition, the physiological feature information of the user may further include finger vein information of the user. In step S502, when the fingerprint sensor collects the third fingerprint of the user, the finger vein information of the user may be further collected by using the second sensor such as an infrared camera. In step S503, the processor 101 may further determine, based on collected finger vein information of a user, whether corresponding fingerprints belong to a same user, and details are not described herein.

S504. Display a payment fingerprint registration interface. The display 1031 displays a payment fingerprint registration interface shown in FIG. 2A and FIG. 2B.

S505. Receive a fourth fingerprint entered by the user. The fourth fingerprint may be a fingerprint that is entered by the user and collected by using the fingerprint sensor after the display 1031 displays a fingerprint enrolling interface shown in FIG. 2B. The fingerprint sensor may send the collected fourth fingerprint to the processor 101.

S506. Determine whether the fourth fingerprint is successfully registered; and if yes, perform step S507; or if not, end this procedure.

The processor 101 may perform matching between the fourth fingerprint and a fingerprint in the database by using an existing fingerprint matching algorithm. If the matching succeeds, it is determined that the fourth fingerprint is successfully registered; or if the matching fails, it is determined that registration of the fourth fingerprint fails. For example, the processor 101 may compare minutiae (for example, an end point of a ridge or a bifurcation point of a ridge) of the fourth fingerprint with minutiae of a fingerprint stored in the database. If it is determined that a quantity of pairs of overlapping minutiae of the fingerprint in the database and the fourth fingerprint is greater than a preset minutia quantity threshold, the processor 101 may determine that the fourth fingerprint is successfully registered.

For example, the fourth fingerprint is the fingerprint of the forefinger of the user A. The processor 101 compares the fingerprint of the forefinger of the user A with a fingerprint (the fingerprint of the forefinger, the fingerprint of the middle finger, and the fingerprint of the ring finger of user A) stored in the database shown in FIG. IE. The processor 101 determines that the database has a fingerprint that matches the fourth fingerprint, namely, the fingerprint of the forefinger of user A. In this case, the processor 101 may determine that the fingerprint of the forefinger of the user A is successfully registered, referring to FIG. 2C.

S507. Determine the fourth fingerprint as a payment fingerprint.

For example, referring to the foregoing description, the fingerprint of the forefinger of the user A in the database shown in FIG. 2C is determined as the payment fingerprint. Optionally, the processor 101 may further determine, as the payment fingerprint, a fingerprint that is in the database and that belongs to the same user as the fourth fingerprint.

S508. Display a fingerprint payment interface. The display 1031 displays the fingerprint payment interface. The fingerprint payment interface may be shown in FIG. 3B, and details are not described herein again.

S509. Receive a first fingerprint entered by the user. The first fingerprint may be a fingerprint that is entered by the user after the display 1031 displays the fingerprint payment interface, and may be used as a payment voucher. Specifically, after the display 1031 displays the fingerprint payment interface, the fingerprint sensor collects the first fingerprint of the user, and sends the collected first fingerprint to the processor 101.

S510. Determine whether the first fingerprint is a payment fingerprint in a plurality of stored fingerprints of the user; and if yes, determine that payment succeeds; or if not, perform step S511.

The processor 101 may perform, by using the existing fingerprint matching algorithm, matching between the first fingerprint and the payment fingerprint in the plurality of fingerprints of the user stored in the database; and if the matching succeeds, determine that the first fingerprint is the payment fingerprint; or if the matching fails, determine that the first fingerprint is not the payment fingerprint. For a fingerprint matching process, refer to the foregoing related description. Details are not described herein again.

S511. Determine whether the first fingerprint is associated with the payment fingerprint in the plurality of stored fingerprints of the user; and if the first fingerprint is associated with the payment fingerprint, determine that payment succeeds; or if the first fingerprint is not associated with the payment fingerprint, determine that payment fails.

In an optional embodiment, the processor 101 may determine whether the first fingerprint is a fingerprint that is in the plurality of fingerprints of the user stored in the database and that belongs to a same user as the payment fingerprint; and if yes, determine that the first fingerprint is associated with the payment fingerprint; or if not, determine that the first fingerprint is not associated with the payment fingerprint. Specifically, the processor 101 may perform, by using the existing fingerprint matching algorithm, matching between the first fingerprint and a fingerprint that belongs to the same user as the payment fingerprint in the database. If the first fingerprint matches the fingerprint that belongs to the same user as the payment fingerprint in the database, it is determined that the first fingerprint is associated with the payment fingerprint; otherwise, it is determined that the first fingerprint is not associated with the payment fingerprint. For a fingerprint matching process, refer to the foregoing related description. Details are not described herein again.

For example, the database is shown in FIG. 2C, and the fingerprint of the forefinger of the user A is the payment fingerprint. The processor 101 may perform matching between the first fingerprint and a fingerprint, namely, the fingerprint of the middle finger of the user A or the fingerprint of the ring finger of the user A, that belongs to the same user as the payment fingerprint: the fingerprint of the forefinger of the user A in the database. If the first fingerprint matches either the fingerprint of the middle finger of the user A or the fingerprint of the ring finger of the user A in the database, the processor 101 may determine that the first fingerprint is associated with the payment fingerprint; or if the first fingerprint matches neither the fingerprint of the middle finger of the user A nor the fingerprint of the ring finger of the user A in the database, the processor 101 may determine that the first fingerprint is not associated with the payment fingerprint. For a fingerprint matching process, refer to the foregoing related description. Details are not described herein again.

It may be learned that in this embodiment of this application, even if the user performs payment fingerprint registration only once, in other words, even if the database stores only one payment fingerprint, all fingerprints that belong to the same user as the payment fingerprint in the database can be used for payment. Therefore, the user needs to perform a payment fingerprint registration operation only once to enable a plurality of fingerprints of the same user to be used for payment, thereby improving convenience of performing a payment operation.

In addition, if fingerprints of a plurality of users are enrolled into the terminal 100, to be specific, the database includes fingerprints of a plurality of users, for example, as shown in Table 1, the database further includes a fingerprint of a forefinger and a fingerprint of a middle finger of a user B in addition to content in the database shown in FIG. 2C. Only the fingerprint of the forefinger of the user A is the payment fingerprint. In this application, neither the fingerprint of the forefinger of the user B nor the fingerprint of the middle finger of the user B can be used for payment. It may be learned that in this embodiment of this application, when fingerprints of a plurality of users are enrolled into the terminal 100, a fingerprint of a user that successfully registers a payment fingerprint can be used for payment, and a fingerprint of another user cannot be used for payment. Therefore, security of fingerprint payment is ensured.

**Table 1**

| **User** | **Fingerprint** |
|---|---|
| User A | Fingerprint of a forefinger (payment fingerprint) |
| | Fingerprint of a middle finger |
| | Fingerprint of a ring finger |
| User B | Fingerprint of a forefinger |
| | Fingerprint of a middle finger |

In another optional embodiment, payment permission is configured for a user that is associated with the payment fingerprint in the plurality of stored fingerprints of the user; and the processor 101 may alternatively determine whether the payment permission is configured for a user that is associated with the first fingerprint in the plurality of stored fingerprints of the user; and if yes, determine that the first fingerprint is associated with the payment fingerprint; or if not, determine that the first fingerprint is not associated with the payment fingerprint. Specifically, the processor 101 may perform matching between the first fingerprint and a fingerprint stored in the database, and check whether the payment permission is configured for a user corresponding to a fingerprint that matches the first fingerprint; and if yes, determine that the first fingerprint is associated with the payment fingerprint; or if not, determine that the first fingerprint is not associated with the payment fingerprint.

For example, as shown in Table 2, the payment permission is configured for the user A corresponding to the payment fingerprint in Table 1 in Table 2.

**Table 2**

| **User** | **Payment permission** | **Fingerprint** |
|---|---|---|
| User A | Yes | Fingerprint of a forefinger (payment fingerprint) |
| | | Fingerprint of a middle finger |
| | | Fingerprint of a ring finger |
| User B | No | Fingerprint of a forefinger |
| | | Fingerprint of a middle finger |

If the user A enters the fingerprint of the middle finger, and the processor 101 finds that a fingerprint that matches the fingerprint of the middle finger entered by the user A in Table 2 is the fingerprint of the middle finger of the user A, and the payment permission is configured for the user A corresponding to the fingerprint of the middle finger of the user A in Table 2, the processor 101 that the fingerprint of the middle finger entered by the user A is associated with the payment fingerprint.

In another optional embodiment, in step S511, if the processor 101 determines that the first fingerprint is not associated with the payment fingerprint, the processor 101 may further send an instruction to the display 1031, so that the display 1031 displays first prompt information, where the first prompt information is used to prompt the user to reenter a fingerprint.

The fingerprint sensor receives a second fingerprint entered by the user, and the optical detection sensor collects physiological feature information of the user when the second fingerprint is received. The fingerprint sensor and the optical detection sensor respectively send the second fingerprint and the physiological feature information of the user corresponding to the second fingerprint to the memory 101.

The processor 101 determines whether a payment fingerprint corresponding to the same physiological feature information as the second fingerprint exists in a stored correspondence between the physiological feature information of the user and the plurality of fingerprints; and adds the second fingerprint to the plurality of fingerprints if the payment fingerprint exists.

For example, as shown in Table 3, physiological feature information of a user is added to Table 3 based on Table 1, and the physiological feature information of the user corresponds to the user and a fingerprint of the user. Specifically, for description of establishing a database in Table 3, refer to an establishment process in FIG. IE, FIG. 2C, and Table 1. Especially, in Table 1, the physiological feature information of the user is used to determine whether fingerprints belong to one user and is added, and details are not described herein.

**Table 3**

| **User** | **Physiological feature information of the user** | **Fingerprint** |
|---|---|---|
| User A | Pulse information of the user A | Fingerprint of a forefinger (payment fingerprint) |
| | | Fingerprint of a middle finger |
| | | Fingerprint of a ring finger |
| User B | Pulse information of the user B | Fingerprint of a forefinger |
| | | Fingerprint of a middle finger |

In this embodiment of this application, the second fingerprint is a fingerprint that is entered by the user after the display 1031 displays the first prompt information. When the display 1031 displays the first prompt information, if the user A enters a fingerprint of a thumb and the optical detection sensor detects physiological feature information of the user A, if the processor 101 determines that a payment fingerprint (the fingerprint of the forefinger of the user A in Table 3) corresponding to the same physiological feature information (the collected physiological feature information of the user A) as the second fingerprint (the thumb fingerprint entered by the user A) exists in Table 3. In this case, the processor 101 adds the second fingerprint (the thumb fingerprint entered by the user A) to Table 3, to form Table 4.

**Table 4**

| **User** | **Physiological feature information of the user** | **Fingerprint** |
|---|---|---|
| User A | Pulse information of the user A | Fingerprint of a forefinger (payment fingerprint) |
| | | Fingerprint of a middle finger |
| | | Fingerprint of a ring finger |
| | | Fingerprint of a thumb |
| User B | Pulse information of the user B | Fingerprint of a forefinger |
| | | Fingerprint of a middle finger |

A person skilled in the art may understand that Table 4 may also be applied to step S508 to step S511. It may be learned that in this embodiment of this application, the user registers a payment fingerprint only once to enable all fingerprints of the user to be used to perform payment, thereby improving convenience of performing a payment operation.

In another optional embodiment, after the display 1031 displays the fingerprint payment interface in step S508, the optical detection sensor further collects pulse information of the user when the fingerprint sensor collects the first fingerprint entered by the user. The fingerprint sensor and the optical detection sensor respectively send the first fingerprint and the physiological feature information of the user corresponding to the first fingerprint to the memory 101.

The processor 101 determines whether a payment fingerprint corresponding to the same physiological feature information as the first fingerprint exists in a stored correspondence between the physiological feature information of the user and the plurality of fingerprints; and if the payment fingerprint exists, determines that the payment succeeds; or if the payment fingerprint does not exist, determines that the payment fails.

For example, as shown in Table 3, after the display 1031 displays the fingerprint payment interface, if the user A enters the fingerprint of the thumb and the optical detection sensor detects physiological feature information of the user A, the processor 101 determines that a payment fingerprint (the fingerprint of the forefinger of the user A in Table 3) corresponding to the same physiological feature information (the collected physiological feature information of the user A) as the first fingerprint (the thumb fingerprint entered by the user A) exists in Table 3. In this case, the payment succeeds.

It may be learned that in this embodiment of this application, the user registers a payment fingerprint only once to enable all fingerprints of the user to be used to perform payment, thereby improving convenience of performing a payment operation.

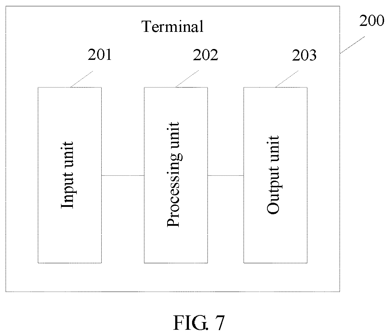

Referring to FIG. 7, FIG. 7 is a functional block diagram of a terminal. Function blocks of the terminal may be implemented in hardware, software, or a combination of the software and the hardware to implement the solutions of this application. A person skilled in the art should understand that the functional blocks described in FIG. 7 may be combined or separated into some sub-blocks to implement the solutions of this application. Therefore, the content described above in this specification may support any possible combination or separation or further limitation of the following function blocks. As shown in FIG. 7, the terminal 200 may include an input unit 201, a processing unit 202, and an output unit 203.

The input unit 201 is configured to receive a first fingerprint entered by a user, where the first fingerprint is used as a payment voucher.

The processing unit 202 is configured to determine whether the first fingerprint is a payment fingerprint in a plurality of stored fingerprints of the user.

The output unit 203 is configured to output a payment success prompt when the processing unit 202 determines that the first fingerprint is the payment fingerprint.

The processing unit 202 is further configured to: when the processing unit 202 determines that the first fingerprint is not the payment fingerprint, determine whether the first fingerprint is associated with the payment fingerprint in the plurality of stored fingerprints of the user.

The output unit 203 is further configured to: output a payment success prompt when the processing unit 202 determines that the first fingerprint is associated with the payment fingerprint; or output a payment failure prompt when the processing unit 202 determines that the first fingerprint is not associated with the payment fingerprint.

Herein, for how the processing unit 202 determines whether the first fingerprint is the payment fingerprint and whether the first fingerprint is associated with the payment fingerprint, refer to the foregoing embodiments. Details are not described herein again.

In an optional implementation, the processing unit 202 is specifically configured to determine whether the first fingerprint is a fingerprint that is in the plurality of stored fingerprints of the user and that belongs to a same user as the payment fingerprint; and if yes, determine that the first fingerprint is associated with the payment fingerprint; otherwise, determine that the first fingerprint is not associated with the payment fingerprint.

For how the processing unit 202 determines whether the first fingerprint is a fingerprint that is in the plurality of stored fingerprints of the user and that belongs to the same user as the payment fingerprint, refer to the foregoing embodiment. Details are not described herein again.

In another optional implementation, payment permission is configured for a user that is associated with the payment fingerprint in the plurality of stored fingerprints of the user; and the processing unit 202 is specifically configured to determine whether the payment permission is configured for a user that is associated with the first fingerprint in the plurality of stored fingerprints of the user; and if yes, determine that the first fingerprint is associated with the payment fingerprint; or if not, determine that the first fingerprint is not associated with the payment fingerprint.

For how to the processing unit 202 determines whether the payment permission is configured for the user that is associated with the first fingerprint in the plurality of stored fingerprints of the user, refer to the foregoing embodiment. Details are not described herein again.

In another optional implementation, the output unit 203 is further configured to output first prompt information when the processing unit 201 determines that the first fingerprint is not associated with the payment fingerprint, where the first prompt information is used to prompt the user to reenter a fingerprint.

The input unit 201 is further configured to receive a second fingerprint entered by the user, and collect physiological feature information of the user when the second fingerprint is received.

The processing unit 202 is further configured to: determine whether a payment fingerprint corresponding to the same physiological feature information as the second fingerprint exists in a stored correspondence between the physiological feature information of the user and the plurality of fingerprints; and add the second fingerprint to the plurality of fingerprints if the payment fingerprint exists.

For description of this embodiment, refer to the foregoing embodiments. Details are not described herein again.

It should be noted that the payment fingerprint in this application may include a fingerprint that is entered by the user when the user registers the payment fingerprint, or may include fingerprints of some or all fingers that are in enrolled fingerprints and that belong to the same user as the fingerprint that is entered by the user when the user registers the payment fingerprint. The physiological feature information of the user may include at least one of the following: pulse information, finger vein information, and the like.

It may be learned that in this embodiment of this application, the user registers a payment fingerprint only once to enable all fingerprints of the user to be used to perform payment, thereby improving convenience of performing a payment operation.

A person skilled in the art should understand that the embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media that include computer-usable program code, including but not limited to a magnetic disk memory, an optical memory, and the like.

This application is described with reference to the flowcharts and/or block diagrams of the method, the device (system), and the computer program product according to the embodiments of this application. It should be understood that computer program instructions may be used to implement each procedure and/or each block in the flowcharts and/or the block diagrams, and a combination of a procedure and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more procedures in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more procedures in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Obviously, a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A payment method, comprising:
receiving a first fingerprint entered by a user;
determining whether the first fingerprint is a payment fingerprint in a plurality of stored fingerprints of the user; and
if the first fingerprint is the payment fingerprint, determining that payment succeeds; or if the first fingerprint is not the payment fingerprint, determining whether the first fingerprint is associated with the payment fingerprint in the plurality of stored fingerprints of the user, and if the first fingerprint is associated with the payment fingerprint, determining that payment succeeds; or if the first fingerprint is not associated with the payment fingerprint, determining that payment fails, wherein the first fingerprint and a fingerprint associated with the first fingerprint belong to the same user.

2. The method according to claim 1, wherein the determining whether the first fingerprint is associated with the payment fingerprint in the plurality of stored fingerprints of the user comprises:
determining whether the first fingerprint is a fingerprint that is in the plurality of stored fingerprints of the user and that belongs to a same user as the payment fingerprint; and if yes, determining that the first fingerprint is associated with the payment fingerprint; otherwise, determining that the first fingerprint is not associated with the payment fingerprint.

3. The method according to claim 1, wherein payment permission is configured for a user that is associated with the payment fingerprint in the plurality of stored fingerprints of the user; and
the determining whether the first fingerprint is associated with the payment fingerprint in the plurality of stored fingerprints of the user comprises:
determining whether the payment permission is configured for a user that is associated with the first fingerprint in the plurality of stored fingerprints of the user; and if yes, determining that the first fingerprint is associated with the payment fingerprint; or if not, determining that the first fingerprint is not associated with the payment fingerprint.

4. The method according to any one of claims 1 to 3, further comprising:
outputting first prompt information if it is determined that the first fingerprint is not associated with the payment fingerprint, wherein the first prompt information is used to prompt the user to reenter a fingerprint;
receiving a second fingerprint entered by the user, and collecting physiological feature information of the user when the second fingerprint is received;
determining whether the payment fingerprint corresponding to the same physiological feature information as the second fingerprint exists in a stored correspondence between the physiological feature information of the user and the plurality of fingerprints; and
adding the second fingerprint to the plurality of fingerprints if the payment fingerprint exists.

5. The method according to claim 4, wherein the physiological feature information comprises at least one of the following: pulse information and finger vein information.

6. The method according to any one of claims 1 to 5, wherein the at least one payment fingerprint comprises a fingerprint that is entered by the user during payment fingerprint registration.

7. The method according to any one of claims 1 to 5, wherein the at least one payment fingerprint further comprises: fingerprints of some or all fingers that are in enrolled fingerprints and that belong to the same user as a fingerprint that is entered by the user during payment fingerprint registration.

8. A terminal, comprising a first sensor, a display, a touch-sensitive surface, one or more processors, and a memory, wherein the memory is configured to store one or more programs, and the one or more programs are configured to be executed by the processor to instruct the terminal to perform the following operations:
collecting, by using the first sensor, a first fingerprint entered by a user;
determining whether the first fingerprint is a payment fingerprint in a plurality of stored fingerprints of the user; and
if the first fingerprint is the payment fingerprint, determining that payment succeeds; or if the first fingerprint is not the payment fingerprint, determining whether the first fingerprint is associated with the payment fingerprint in the plurality of stored fingerprints of the user, and if the first fingerprint is associated with the payment fingerprint, determining that payment succeeds; or if the first fingerprint is not associated with the payment fingerprint, determining that payment fails, wherein the first fingerprint and a fingerprint associated with the first fingerprint belong to the same user.

9. The terminal according to claim 8, wherein the one or more programs are configured to be executed by the processor to instruct the terminal to perform the following operations:
determining whether the first fingerprint is a fingerprint that is in the plurality of stored fingerprints of the user and that belongs to a same user as the payment fingerprint; and if yes, determining that the first fingerprint is associated with the payment fingerprint; otherwise, determining that the first fingerprint is not associated with the payment fingerprint.

10. The terminal according to claim 8, wherein payment permission is configured for a user that is associated with the payment fingerprint in the plurality of stored fingerprints of the user; and
the one or more programs are configured to be executed by the processor to instruct the terminal to perform the following operations:
determining whether the payment permission is configured for a user that is associated with the first fingerprint in the plurality of stored fingerprints of the user; and if yes, determining that the first fingerprint is associated with the payment fingerprint; or if not, determining that the first fingerprint is not associated with the payment fingerprint.

11. The terminal according to any one of claims 8 to 10, wherein the terminal further comprises a second sensor, and the one or more programs are configured to be executed by the processor to instruct the terminal to perform the following operations:
displaying first prompt information by using the display if it is determined that the first fingerprint is not associated with the payment fingerprint, wherein the first prompt information is used to prompt the user to reenter a fingerprint;
collecting, by using the first sensor, a second fingerprint entered by the user, and collecting the physiological feature information of the user by using the second sensor when the second fingerprint is collected;
determining whether the payment fingerprint corresponding to the same physiological feature information as the second fingerprint exists in a stored correspondence between the physiological feature information of the user and the plurality of fingerprints; and
adding the second fingerprint to the plurality of fingerprints if the payment fingerprint exists.

12. The terminal according to claim 11, wherein the physiological feature information comprises at least one of the following: pulse information and finger vein information.

13. The terminal according to any one of claims 8 to 12, wherein the at least one payment fingerprint comprises a fingerprint that is entered by the user during payment fingerprint registration.

14. The terminal according to any one of claims 8 to 12, wherein the at least one payment fingerprint further comprises: fingerprints of some or all fingers that are in enrolled fingerprints and that belong to the same user as the fingerprint that is entered by the user during payment fingerprint registration.

15. A readable non-volatile storage medium that stores a computer instruction, wherein the computer instruction is executed by a terminal that has a first sensor, a display, a touch-sensitive surface, and one or more processors, to implement the method according to any one of claims 1 to 7.

16. A graphical user interface of a terminal, wherein the terminal comprises a first sensor, a display, a touch-sensitive surface, one or more processors, and a memory; and
when the first sensor detects a first fingerprint entered by a user, a payment success prompt is displayed if it is determined that the first fingerprint is a payment fingerprint in a plurality of stored fingerprints of the user; or a payment success prompt is displayed if it is determined that the first fingerprint is associated with the payment fingerprint in a plurality of stored fingerprints of the user; or
a payment failure prompt is displayed if it is determined that the first fingerprint is not associated with the payment fingerprint in a plurality of stored fingerprints of the user, wherein
the first fingerprint and a fingerprint associated with the first fingerprint belong to the same user.

17. The interface according to claim 16, wherein the terminal further comprises a second sensor, and first prompt information is displayed if it is determined that the first fingerprint is not associated with the payment fingerprint, wherein the first prompt information is used to prompt the user to reenter a fingerprint;
a second fingerprint entered by the user is collected by using the first sensor, and physiological feature information of the user is collected by using the second sensor when the second fingerprint is collected;
it is determined whether the payment fingerprint corresponding to the same physiological feature information as the second fingerprint exists in a stored correspondence between the physiological feature information of the user and the plurality of fingerprints; and
the second fingerprint is added to the plurality of fingerprints if the payment fingerprint exists.
